# EUROPEAN PATENT SPECIFICATION

(11) **EP 1 489 116 B1**
(45) Date of publication and mention of the grant of the patent: **29.07.2015**
(21) Application number: 03712901.2
(22) Date of filing: 25.03.2003
(51) Int. Cl.: C08F 297/02, C09J 153/00, C08L 53/00

(54) **DIBLOCK COPOLYMER AND PRESSURE-SENSITIVE ADHESIVE COMPOSITIONS CONTAINING THE SAME**
DIBLOCKCOPOLYMER UND DIESES ENTHALTENDE HAFTKLEBSTOFFZUSAMMENSETZUNGEN
COPOLYMERE A DEUX BLOCS ET COMPOSITIONS ADHESIVES AUTOCOLLANTES EN CONTENANT

(30) Priority: 26.03.2002 JP 2002086270
(43) Date of publication of application: 22.12.2004
(73) Proprietor: KURARAY CO., LTD., Kurashiki-shi, Okayama 710-8622 (JP)
(72) Inventor: MORISHITA, Yoshihiro, c/o Kuraray Co., Ltd., Tsukuba-shi, Ibaraki 305-0841 (JP); HAMADA, Kenichi, c/o Kuraray Co., Ltd., Tsukuba-shi, Ibaraki 305-0841 (JP); SASAKI, Shigeru, c/o Kuraray Co., Ltd., Kurashiki-shi, Okayama 710-8622 (JP)
(74) Representative: Müller-Boré & Partner Patentanwälte PartG mbB
(86) International application number: PCT/JP2003/003590
(87) International publication number: WO 2003/080691

(56) References cited:
- EP-A- 0 545 184
- WO-A-00/44846
- JP-A- 10 298 248
- JP-A- 11 335 432
- JP-A- 2000 313 867
- JP-A- 2001 200 026
- JP-A- 2001 348 553

## Description

### Technical Field

The present invention relates to a hot melt adhesive composition comprising acrylic diblock copolymer and triblock copolymer useful for supplying an acrylic adhesive excellent in various adhesive performances such as holding power and adhesion without impairing the heat resistance or weather resistance thereof, and in particular, an acrylic adhesive excellent in hot-melt processability.

### Background Art

An acrylic adhesive (the word "adhesive" means "pressure-sensitive adhesive") has widely been used for an adhesive material such as an adhesive tape or an adhesive sheet in recent years by making good use of characteristics of its heat resistance and weather resistance, which are superior to those of rubber type adhesives and originate from the structure thereof. Acrylic adhesives are generally classified, on the basis of the form thereof, mainly into a solution type adhesive, an emulsion type adhesive and a hot-melt type adhesive. Of these adhesives, the solution type adhesive is an adhesive dissolved in an organic solvent. The adhesive is applied onto a substrate and then the organic solvent is vaporized, thereby forming an adhesive layer on the substrate. Therefore, an effect of the used organic solvent on the environment is a problem. Regarding emulsion type adhesive, the adhesive is applied, in an emulsion state, onto a substrate and then water is vaporized, thereby forming an adhesive layer on the substrate. Therefore, wastewater treatment and a large drying energy are problems. Regarding hot-melt type adhesive, the adhesive is applied, into a hot-melt state, onto a substrate, thereby forming an adhesive layer on the substrate. Therefore, the adhesive has characteristics of imposing small burdens on the environment and having excellent safety, and requires no step of drying any organic solvent or water as compared with the solution type adhesive and the emulsion type adhesive, so as to exhibit a high productivity of adhesive materials. In addition, the hot-melt type adhesive also has many advantages from the viewpoints of energy saving and resource saving. However, the hot-melt type adhesive has a drawback that the holding power thereof is low under high temperature conditions since the adhesive is hot-meltable.

Therefore, regarding the performances of acrylic hot-melt adhesives, it is preferable that the adhesives are excellent in heat resistance and weather resistance and further are excellent in both of various adhesive performances, such as holding power and adhesion, and hot-melt processability. In order to subject an adhesive agent to hot-melt application, the following matters are necessary: the melt viscosity of the adhesive is low; a change in the volume thereof is small between the melted adhesive and the adhesive kept at ambient temperature; the thermal stability thereof is superior. Of these matters, the melt viscosity of the adhesive can be made low by blending a plasticizer, a tackifier having a low softening temperature with the adhesive. However, the holding power is remarkably lowered.

In recent years, demands for the performances of adhesives have been increasingly raised at a higher level. In such a situation, it is intensely desired to supply an acrylic hot-melt type adhesive having both of adhesive performances, such as holding power and adhesion, and hot-melt processability. It is very significant to attain the desire. As past investigations for obtaining an acrylic hot-melt type adhesive having the above-mentioned characteristics, for example, the following reports are known.
(1) Japanese Patent Application Laid-Open (JP-A) No. 2-103277 (to which EP-A No. 0349270 corresponds) suggests that a block copolymer having a polymer block made of alkyl methacrylates and a polymer block made of alkyl acrylates is yielded by inferter polymerization using an inferter such as xylylene-bis (N, N-diethyldithiocarbamate) or xylylene-bis(N-carbazoyldithiocarbamate) and then the block copolymer is used as a base polymer for adhesives.
(2) Japanese Patent Publication (JP-B) No. 59-33148 and JP-A Nos. 9-125019 and 9-324165 suggest a block copolymer having a polymer block made of alkyl acrylates or alkyl methacrylates and a polymer block made of vinyl monomers as a base polymer for adhesives which is excellent in weather resistance.
(3) JP-A No. 11-302617 suggests, as a base polymer for adhesives, a block copolymer having a polymer block which is made mainly of - alkyl methacrylates and has a glass transition temperature of +110 °C or higher and a syndiotacticity of 70% or more, and a polymer block which is made mainly of alkyl acrylates and/or alkyl methacrylates and has a glass transition temperature of +30 °C or lower.

Furthermore, JP-A No. 11-323072 discloses that into this is incorporated a diblock copolymer made of alkyl acrylates and/or alkyl methacrylates, thereby adjusting the adhesive properties with a good balance to improve overall performances of the adhesive properties or improve the hot-melt processability.
(4) JP-A Nos. 2001-139646 and 2001-288439 (to which US-A No. 2001-0044024 corresponds) suggest, as a base polymer for adhesives, an acrylic star block polymer obtained by multi-step radical polymerization. WO0044846 and EP0545184 disclose various meth/acrylate based block copolymer compositions, including adhesive material compositions.

However, according to the acrylic adhesives suggested in the above-mentioned official reports, sufficient performances have not yet been necessarily exhibited about adhesive properties such as holding power and adhesion, and hot-melt processability. In the actual situation, the market requires acrylic polymers useful for obtaining adhesive compositions having the above-mentioned characteristics in order to make the formulation latitude of adhesives high.

The diblock copolymers suggested in the JP-A Nos. 9-324165 and 11-323072 and others have adhesiveness in themselves, and consequently, there are problems that these copolymers are not easily made into a pellet form, a powdery form or a liquid form, (which may be a starch syrup form), which is a packing style of an ordinary synthetic resin product. Thus the handlability thereof is poor, and the improvement in the melt viscosity thereof is insufficient.

Accordingly, an object of the present invention is to provide an acrylic hot-melt adhesive excellent in various adhesive properties such as holding power and adhesion and further excellent in hot-melt processability without impairing the heat resistance or weather resistance thereof; and an adhesive material comprising the hot-melt adhesive composition.

The inventors have made eager investigations about the above-mentioned problems, so as to find out that an acrylic block copolymer having a specific structure is useful for obtaining an acrylic hot-melt adhesive excellent in various adhesive properties such as holding power and adhesion and further excellent in hot-melt processability without impairing the heat resistance or weather resistance. Thus, the present invention has been made.

### Disclosure of the Invention

The present invention is a hot-melt adhesive composition comprising the diblock copolymer and triblock copolymer according to claim 1.

Furthermore, the present invention is also related to an adhesive material, comprising the hot-melt adhesive composition according to claim 1.

### Best Modes for Carrying Out the Invention

The diblock copolymer comprised in the hot-melt adhesive composition of the present invention is an X-Y type diblock copolymer represented by the general formula (I). In the general formula (I), X represents a polymer block made of alkyl methacrylate units wherein the alkyl is one having 1 to 4 carbon atoms or one having a cyclic structure, and Y represents a polymer block made of alkyl acrylate units wherein the alkyl has 1 to 20 carbon atoms and/or alkyl methacrylate units wherein the alkyl has 5 to 20 carbon atoms. From the viewpoints of adhesive performance, hot-melt processability, and others, preferable is a diblock copolymer represented by the general formula (I) wherein the polymer block X is made mainly of alkyl methacrylate units wherein the alkyl has 1 to 4 carbon atoms and the polymer block Y is made mainly of alkyl acrylate units wherein the alkyl has 1 to 20 carbon atoms.

Examples of the alkyl having 1 to 4 carbon atoms in the polymer block X include methyl, ethyl, n-propyl, isopropyl, n-butyl, sec-butyl, isobutyl and tert-butyl groups. Examples of the alkyl having a cyclic structure include cyclopropyl, cyclobutyl, cyclopentyl, cyclohexyl, cycloheptyl, and isobornyl groups. These groups may have a substituent. Examples of the substituent include alkoxy groups such as methoxy, ethoxy, n-propoxy and isopropoxy, and tert-butoxy groups; amino groups such as N,N-dimethylamino, and N,N-diethylamino groups; and halogen atoms such as chlorine, bromine, and fluorine.

The monomer which constitutes the alkyl methacrylate unit wherein the alkyl is one having 1 to 4 carbon atoms or one having a cyclic structure is not necessarily limited, and examples thereof include methyl methacrylate, ethyl methacrylate, isopropyl methacrylate, sec-butyl methacrylate, isobutyl methacrylate, tert-butyl methacrylate, cyclohexyl methacrylate, isobornyl methacrylate, 2-methoxyethyl methacrylate, 2-(N,N-dimethylamino)ethyl methacrylate, and trifluoromethyl methacrylate. These can be used alone or in combination of two or more.

In the case that the polymer block X is a polymer block made of alkyl methacrylate units where the alkyl is one having 5 or more carbon atoms and no cyclic structure, the glass transition temperature (Tg) of the polymer block X is low. Therefore, when this is used as a blending component of an adhesive, the holding power and heat resistance thereof are damaged. Thus, this case is not preferable. For this reason, the glass transition temperature (Tg) of the polymer block X is preferably +50 °C or higher, more preferably +70 °C or higher.

The polymer block represented by X in the general formula (I) can contain only the above-mentioned alkyl methacrylate units. However, the polymer block may contain a monomer unit other than the alkyl methacrylate units wherein the alkyl is one having 1 to 4 carbon atoms or one having a cyclic structure if the ratio thereof is a small ratio in such a range that the advantageous effects of the present invention are not damaged (usually, 20% or less by mass of the total of the polymer block X). As the other monomer unit, the following may be contained: a constituent originating from a monomer such as an alkyl methacrylate having 5 or more carbon atoms, such as 2-ethylhexyl methacrylate, or dodecyl methacrylate; an alkyl acrylate, such as methyl acrylate, n-butyl acrylate or t-butyl acrylate; a methacrylate other than alkyl esters, such as trimethylsilyl methacrylate; an acrylate other than alkyl esters, such as trimethylsilyl acrylate; a methacrylamide such as methacrylamide, N-methylmethacrylamide, N-ethylmethacrylamide, N-isopropylmethacrylamide, N,N-dimethylmethacrylamide or N,N-diethylmethacrylamide; an acrylamide such as acrylamide, N-methylacrylamide, N-ethylacrylamide, N-isopropylacrylamide, N,N-dimethylacrylamide or N,N-diethylacrylamide; a vinyl monomer having a carboxyl group, such as methacrylic acid, acrylic acid, crotonic acid, maleic acid, maleic anhydride, or fumaric acid; an aromatic vinyl monomer such as styrene, α-methylstyrene, or p-methylstyrene; a conjugated diene monomer such as butadiene or isopropylene; an olefin such as ethylene or propylene; or a lactone such as ε-caprolactone or valerolactone.

Examples of the alkyl having 1 to 20 carbon atoms in the polymer block Y include methyl, ethyl, n-propyl, isopropyl, n-butyl, isobutyl, sec-butyl, tert-butyl, 2-methylbutyl, 3-methylbutyl, n-octyl, 2-ethylhexyl, isononyl, dodecyl, tridecyl, and stearyl groups. Examples of the alkyl having 5 to 20 carbon atoms include n-pentyl, 2-methylbutyl, 3-methylbutyl, n-octyl, 2-ethylhexyl, dodecyl, and stearyl groups. These groups may have a substituent. Examples of the substituent include alkoxy groups such as methoxy, ethoxy, n-propoxy and isopropoxy, and tert-butoxy groups; amino groups such as N,N-dimethylamino, and N,N-diethylamino groups; and halogen atoms such as chlorine, bromine, and fluorine.

The monomer which constitutes the alkyl acrylate wherein the alkyl has 1 to 20 carbon atoms is not necessarily limited, and examples thereof include methyl acrylate, ethyl acrylate, n-propyl acrylate, isopropyl acrylate, n-butyl acrylate, isobutyl acrylate, sec-butyl acrylate, tert-butyl acrylate, n-hexyl acrylate, 2-ethylhexyl acrylate, dodecyl acrylate, tridecyl acrylate, stearyl acrylate, 2-methoxyethyl acrylate, 2-(N,N-dimethylamino) ethyl acrylate, trifluromethyl acrylate, and trimethoxysilylpropyl acrylate. These may be used alone or in combination of two or more. The monomer which constitutes the alkyl methacrylate wherein the alkyl has 5 to 20 carbon atoms is not necessarily, and examples thereof include n-pentyl methacrylate, n-hexyl methacrylate, 2-ethylhexyl methacrylate, dodecyl methacrylate, tridecyl methacrylate, stearyl methacrylate, 2-methoxypentyl methacrylate, 2-(N,N-dimethylamino)pentyl methacrylate, perfluoropentyl methacrylate, and 2-trimethoxysilylpentylmethacrylate. These may be used alone or in combination of two or more.

In the case that the polymer block Y is a polymer block made of the alkyl methacrylate units wherein the alkyl has 1 to 4 carbon atoms, the glass transition temperature (Tg) of the polymer block Y is high. Therefore, when the polymer block is used as a blending component of an adhesive, the adhesive hardens to lower the adhesion thereof and the hot-melt processability thereof is damaged. Thus, this case is not preferable. For this reason, the glass transition temperature (Tg) of the polymer block Y is preferably less than +50 °C, more preferably +10 °C or less, even more preferably -20 °C or less.

The polymer block represented by Y in the general formula (I) can contain only the alkyl acrylate units wherein the alkyl has 1 to 20 carbon atoms and/or the alkyl methacrylate units wherein the alkyl has 5 to 20 carbon atoms. However, the polymer block may contain a monomer unit other than the alkyl acrylate units wherein the alkyl has 1 to 20 carbon atoms and/or the alkyl methacrylate units wherein the alkyl has 5 to 20 carbon atoms if the ratio thereof is a small ratio in such a range that the advantageous effects of the present invention are not damaged (usually, 20% or less by mass of the total of the polymer block Y). As the other monomer unit, the following may be contained: a constituent originating from a monomer such as an alkyl methacrylate wherein the alkyl has 21 or more carbon atoms; an alkyl methacrylate wherein the alkyl has 1 to 4 carbon atoms; an alkyl methacrylate wherein the alkyl has 21 or more carbon atoms; a methacrylate other than alkyl esters, such as trimethylsilyl methacrylate; an acrylate other than alkyl esters, such as trimethylsilyl acrylate; a methacrylamide such as methacrylamide, N-methylmethacrylamide, N-ethylmethacrylamide, N-isopropylmethacrylamide, N,N-dimethylmethacrylamide or N,N-diethylmethacrylamide; an acrylamide such as acrylamide, N-methylacrylamide, N-ethylacrylamide, N-isopropylacrylamide, N,N-dimethylacrylamide or N,N-diethylacrylamide; a vinyl monomer having a carboxyl group, such as methacrylic acid, acrylic acid, crotonic acid, maleic acid, maleic anhydride, or fumaric acid; an aromatic vinyl monomer such as styrene, α-methylstyrene, or p-methylstyrene; a conjugated diene monomer such as butadiene or isopropylene; an olefin such as ethylene or propylene; or a lactone such as ε-caprolactone or valerolactone.

The diblock copolymer represented by the general formula (I) may optionally have, in a side chain of the molecule thereof or at a terminal of the main chain of the molecule, a functional group such as a hydroxyl, carboxyl, acid anhydride, amino or trimethoxysilyl group as far as the advantageous effects of the present invention are not damaged.

Diblock copolymers represented by X-Y, as described above, are diblock copolymers composed of a "hard block" and a "soft block", and copolymers having a form of a rice cake have been used hitherto. However, the copolymers have problems about handlability. Paying attention to this point, the inventors have made investigations from the viewpoints of the producing property of a diblock copolymer itself and the handlability thereof in the step of blending the copolymer with other components, so as to find out that a diblock copolymer which has fluidity, for example, in the temperature range of 100 °C or higher to be in a liquid state is very good in handlability and further so as to make it clear that the diblock copolymer is useful for adhesives.

Thus, in the present invention, it is necessary that the weight-average molecular weight (Mw) of the polymer block X in the diblock copolymer satisfying the general formula (I) is from 1,000 to 8,000. In order to obtain an adhesive composition excellent in both of adhesive properties and hot-melt processability, the molecular weight is preferably from 2, 000 to 6, 000, more preferably from 3,000 to 5,000. If the weight-average molecular weight (Mw) of the polymer block X is more than 8,000, the resultant diblock copolymer unfavorably turns into a soft and sticky form so that the handlability thereof in production lowers or the handlability unfavorably deteriorates in the step of blending the copolymer with other components such as a triblock copolymer. Moreover, the viscosity of the composition containing the diblock copolymer becomes high when it is melted. Therefore, the diblock copolymer is not preferred, either, for being used as a blending component of an adhesive composition, in particular, a hot-melt type adhesive. On the other hand, if the weight-average molecular weight (Mw) of the polymer block X is less than 1,000, the holding power lowers largely. Thus, the polymer block is not preferred for being used as a blending component of an adhesive.

If the ratio of the total mass of the polymer block represented by X in the total mass of the polymer blocks in the diblock copolymer represented by the general formula (I) is too small, the holding power of the resultant block copolymer is small. Consequently, when the block copolymer is used as a component of an adhesive, adhesive properties of the resultant adhesive composition, such as the holding power (shearing creep strength) thereof, tend to fall. Contrarily, if the ratio of the total mass of the polymer block represented by X is too large, adhesive properties (in particular, the adhesion) of the resultant block copolymer, when being used as an adhesive composition, tend to be insufficient. From these points, the ratio of the mass of the polymer block X contained in the diblock copolymer of the present invention to that of the polymer block Y, which is the X/Y mass ratio, is essentially in the range of 1/99 to 10/90, and is preferably in the range of 5/95 to 10/90.

When the polymer block X is used as a blending component of an adhesive in the diblock copolymer of the present invention, the ratio of the weight-average molecular weight (Mw) of the polymer block X to the number-average molecular weight(Mn) thereof is preferably 1.5 or less, more preferably from 1.01 to 1.3 in order to make the holding power thereof excellent.

The weight-average molecular weight (Mw) of the whole of the diblock copolymer of the invention is not particularly limited. When the diblock copolymer is used as a blending component of an adhesive, the weight-average molecular weight is preferably from 10,000 to 50,000, more preferably from 10,000 to 200,000 for the following reason: when the diblock copolymer is used as a blending component of an adhesive, the holding power and the hot-melt processability thereof can be made compatible with each other.

The fluidity of the diblock copolymer of the invention is affected by the weight-average molecular weight (Mw) of the polymer block X and the mass ratio of X/Y; therefore, as the weight-average molecular weight (Mw) of the polymer block X is larger and the mass ratio of X/Y is larger, the fluidity tends to be lower. Therefore, in the case that the weight-average molecular weight (Mw) of the polymer block X, which satisfies the above-mentioned requirements of the invention, is from 2,000 to 6,000 and the mass ratio of X/Y is from 1/99 to 10/90, the diblock copolymer can keep fluidity which results in superior handlability in the production of the diblock copolymer or superior handlability in the step of blending the diblock copolymer with other components. In order to make better the handlability in the production or the handlability in the step of blending the diblock copolymer with other components, the viscosity of the diblock copolymer is from 1 to 1,000 Pa·s, more preferably from 1 to 500 Pa·s at temperatures of 80 to 120 °C (inclusive).

The process for producing the diblock copolymer of the invention is not particularly limited as far as the block copolymer satisfying the above-mentioned requirements can be obtained. A process according to a known process can be adopted. As a process for obtaining a block copolymer, there is generally adopted a process of living-polymerizing a monomer which constitutes each of the blocks. Examples of the process of such living polymerization include a process of performing anionic polymerization in the presence of a mineral acid salt such as an alkali metal salt or an alkaline earth metal salt, using an organic alkali metal compound as a polymerization initiator (see JP-B No. 7-25859, and USP No. 5,264,527 corresponding thereto); a process of performing anionic polymerization in the presence of an organic aluminum compound, using an organic alkali metal compound as a polymerization initiator (see JP-A No. 11-335432, and USP No. 6,329,480 corresponding thereto); a process of performing polymerization, using an organic rare earth metal complex as a polymerization initiator (see JP-A No. 6-93060); a process of performing radical polymerization in the presence of a copper compound, using an α-halogenated ester compound as an initiator (see Macromol. Chem. Phys. vol., 201, pp. 1108-1114 (2000)); and a process of using a polyvalent radical polymerization initiator or a polyvalent radical chain transfer agent to polymerize a monomer which constitutes each block, thereby producing a mixture which partially contains the diblock copolymer of the invention.

The method for collecting the polymer after the polymerization step is not particularly limited. Since the diblock copolymer of the invention is a liquid substance having a high fluidity at elevated temperatures, the copolymer can be handled with a device having a small torque capacity also. Thus, there is adopted, for example, a method of heating a tank-shaped reactor with a stirrer to remove the solvent used in the polymerization, and then collecting the diblock copolymer from a valve positioned at the lower portion.

The style and the means of the transportation of the diblock copolymer of the invention are not particularly limited. Since the diblock copolymer of the invention is a liquid substance having a high fluidity at elevated temperatures, the diblock copolymer can be transported to a desired device with good operability, for example, by filling the diblock copolymer heated to be in a liquid state into a small-capacity container, such as a storage drum, cooling this, transporting the container, and then heating the container again.

The diblock copolymer is suitably used as a blending component of an adhesive since a composition obtained by mixing the copolymer with other blending components which are used if desired, such as other polymers, exhibits various superior adhesive properties, such as holding power, at elevated temperatures. Furthermore, the adhesive composition into which the diblock copolymer of the invention is incorporated is easily melted by receiving heat, so as to have a high fluidity. Accordingly, the adhesive composition is suitable for being used as a hot-melt type adhesive.

Other components may be appropriately incorporated into the composition if desired. Components which may be optionally incorporated into the adhesive composition of the invention are not particularly limited, and examples thereof include a different polymer and a tackifier.

The different polymer can be used without any especial limitation. For example, if the different polymer is a thermoplastic polymer, a polymer other than the above-mentioned diblock copolymer can be used. Specific examples of this polymer include block copolymers other than the above-mentioned diblock copolymer, poly (n-butyl acrylate), EPR, EPDM, ethylene-ethyl acrylate copolymer, ethylene-vinyl acetate copolymer, and poly (vinyl acetate). One or more out of these polymers may be used.

The block copolymer other than the above-mentioned diblock copolymer is not necessarily limited, and examples thereof include block copolymers which are different from the above-mentioned diblock copolymer represented by the general formula (I) and are represented by the formulae (A-B)ₐ, (A-B-C)_{b}, (A-B)_{c}-A, (A-B)ₘ-Z and so on in which A, B and C represent polymer blocks different from each other, and at least one thereof is made of alkyl acrylate units and/or alkyl methacrylate units, a, band c may be the same or different and each represent an integer of 1 to 10, m represents an integer of 3 to 30, and Z represents a compound residue which makes it possible that the plural copolymers (A-B) can be bonded to each other. Acrylic block copolymers are preferable. The monomer which constitutes the polymer blocks A, B and C is not necessarily limited. Examples thereof include alkyl methacrylates such as methyl methacrylate, ethyl methacrylate, n-propyl methacrylate, isopropyl methacrylate, n-butyl methacrylate, isobutyl methacrylate, sec-butyl methacrylate, t-butyl methacrylate, amyl methacrylate, isoamyl methacrylate, n-hexyl methacrylate, 2-ethylhexyl methacrylate, and dodecyl methacrylate; alkyl acrylates such as methyl acrylate, ethyl acrylate, n-propyl acrylate, isopropyl acrylate, n-butyl acrylate, isobutyl acrylate, sec-butyl acrylate, t-butyl acrylate, amyl acrylate, isoamyl acrylate, n-hexyl acrylate, 2-ethylhexyl acrylate, and dodecyl acrylate; aromatic vinyl monomers such as styrene, α-methylstyrene, and p-methylstyrene; and conjugated diene monomers such as butadiene and isoprene. Double bonds in the polymer block made of the conjugated diene monomers may be hydrogenated.

The different polymer is preferably an acrylic block copolymer for the viewpoint that an adhesive composition excellent in holding power is obtained. In the acrylic block copolymer, at least one of the polymers A, B and C is preferably made of the above-mentioned alkyl acrylate units and/or alkyl methacrylate units from the viewpoints that the compatibility between the different copolymer and the diblock copolymer of the invention is good to give improved homogeneity and the heat resistance and weather resistance of the adhesive composition are made superior. All of the polymer blocks A, B and C are more preferably made of the alkyl acrylate units and/or alkyl methacrylate units. It is particularly preferable that the polymer block A is made of the alkyl methacrylate, the polymer block B is made of the alkyl acrylate and the polymer block C is made of the alkyl methacrylate or the alkyl acrylate. Particularly preferable and specific examples of these acrylic block copolymers include triblock copolymers represented by the formula A-B-A or A-B-C, such as poly (methyl methacrylate)-b-poly(n-butyl acrylate)-b-poly(methyl methacrylate), poly(methyl methacrylate)-b-poly(n-butyl acrylate)-b-poly(methyl acrylate), and poly(methyl methacrylate)-b-poly(n-butyl acrylate)-b-poly(ethyl acrylate). Of these examples, more desirable is a triblock copolymer represented by the structure of poly (methyl methacrylate) -b-poly (n-butyl acrylate) -b-poly (methyl methacrylate).

The weight-average molecular weights of the polymer block A, the polymer block B and the polymer block C of the block copolymer are not necessarily limited. In general, the molecular weights are each preferably from 3,000 to 500,000, preferably from 3,000 to 300,000. The weight-average molecular weight of the whole of the block copolymer is not necessarily limited. In general, the molecular weight is preferably from 10,000 to 1,000,000, more preferably from 30, 000 to 500, 000, even more preferably from 40,000 to 200,000.

A tackifier is incorporated into the hot-melt adhesive composition of the invention, whereby the tackiness, the adhesion, the holding power and others thereof may easily be improved or adjusted. The tackifier which can be incorporated is not particularly limited. Examples thereof include rosin derivatives such as rosin ester, gum rosin, tall oil rosin, hydrogenated rosin ester, maleic rosin, and disproportioned rosin ester; terpene resins made mainly of terpene phenol resin, α-pinene, β-pinene, limonene, or the like; (hydrogenated) petroleum resin, cumarone-indene resin, hydrogenated aromatic copolymers, styrene resins, phenol resins, and xylene resins. These may be used alone or in combination of two or more thereof.

The blend ratio between the diblock copolymer, the different polymer and the tackifier, which are main constituents of the adhesive composition of the invention, can be appropriately selected in accordance with the purpose of the adhesive agent, the kind of an object to be adhered, and others, and is not particularly limited. In order to make the holding power and the adhesion thereof excellent and make the applicability good, it is preferred that the amount of the different polymer is from 10 to 10, 000 parts and the tackifier is from 0 to 10, 000 parts by mass for 100 parts by mass of the diblock copolymer of the invention. It is more preferred that the amount of the different polymer is from 10 to 5, 000 parts and the tackifier is from 0 to 5, 000 parts by mass for 100 parts by mass of the diblock copolymer of the invention.

The hot-melt adhesive composition of the invention may contain various plasticizers if necessary. Examples of the plasticizers include phthalic acid esters such as dibutyl phthalate, di n-octyl phthalate, bis (2-ethylhexyl) phthalate, di n-decyl phthalate, and diisodecyl phthalate; adipic acid esters such as bis(2-ethylhexyl) adipate and di n-octyl adipate; sebacic acid esters such as bis (2-ethylhexyl) sebacate and di n-butyl sebacate; azelaic acid esters such as bis(2-ethylhexyl)azelate; paraffins such as chlorinated paraffins; glycols such as propylene glycol; epoxy-modified vegetable oils such as epoxidized soybean oil and epoxidized linseed oil; phosphoric acid esters such as trioctyl phosphate and triphenyl phosphate; phosphorous acid esters such as triphenyl phosphite; ester oligomers such as an ester made from adipic acid and 1,3-butylene glycol; low molecular weight polymers such as low molecular weight polybutene, low molecular weight polyisobutylene, and low molecular weight polyisoprene; and oils such as process oil and naphthene oils. These may be used alone or in the form of a mixture of two or more thereof. The used amount of the plasticizer is generally from 0 to 1,000 parts by mass for 100 parts by mass of the total of the adhesive blending components other than the plasticizer.

If necessary, the hot-melt adhesive composition of the present invention may contain various additives. Specific examples of the additives include an antioxidant and an ultraviolet absorber for making the weather resistance, the heat resistance, the oxidation resistance and others better; an inorganic powdery filler such as calcium carbonate, titanium oxide, mica or talc; and a fibrous filler such as glass fiber or organic reinforcing fiber.

The process for producing the hot-melt adhesive composition of the invention is not particularly limited. For example, the composition can be obtained by using a known mixing/kneading apparatus such as a kneader-ruder, an extruder, a mixing roll, or a Banbury mixer to mix and knead components which constitute the adhesive composition at a temperature that is usually in the range of 100 to 250 °C. The adhesive composition of the invention can also be obtained by dissolving the respective components into an organic solvent, mixing the components, and then distilling off the organic solvent.

An adhesive material comprising the hot-melt adhesive composition of the invention, can be produced by making the adhesive composition of the invention into a melted state, applying the melted composition onto a substrate which is made of paper, paper board, cellophane, resin, cloth, wood, metal or the like and has a desired shape such as a film, sheet or tape shape, and then cooling the resultant. The adhesive composition of the invention is dissolved in a solvent such as toluene so as to be made into a solution state, whereby the composition may be used as a solvent type adhesive. In such a case, an adhesive material described above may be produced by applying this solvent type adhesive onto a substrate and then vaporizing the solvent.

Examples of the adhesive material, which is obtained by forming an adhesive layer made of the adhesive composition of the invention onto a substrate, include an adhesive sheet, an adhesive film, an adhesive tape, a pressure-sensitive tape, a masking tape, an electrically insulating tape, and a laminate.

Of the above-mentioned adhesive materials, particularly typical examples include an adhesive film and an adhesive tape wherein an adhesive layer made of the adhesive composition of the invention is formed on at least one portion of a surface of a base film.

The invention is specifically described by way of working examples and others.

In the following synthesis examples, any compound was dried and purified in the usual way, and nitrogen was used to remove air therefrom. The transportation and supply of any compound were conducted in the atmosphere of argon.

The weight-average molecular weights (Mw) and the molecular weight distributions (Mw/Mn) of any polymer and any block copolymer were obtained as molecular weights in terms of polystyrene by use of GPC (gel permeation chromatography). The constituting ratio of each polymer block in the block copolymer was obtained by ¹H-NMR (¹H-nuclear magnetic resonance) measurement.

The measuring devices and conditions used above are as follows. (1) GPC:
- Device: GPC device "HLC-8020", manufactured by Tosoh Corp.
- Separating column: columns "TSKgel GMHXL", "G4000HXL" and "G5000HXL" manufactured by Tosoh Corp. which were connected in series
- Eluting agent: tetrahydrofuran
- Eluting agent flow rate: 1.0 mL/minute
- Column temperature: 40 °C
- Detecting method: Differential refractive index (RI) (2) ¹H-NMR
- Device: Nuclear magnetic resonator, manufactured by JEOL. Ltd.
- Deuterium solvent: deuterated chloroform

As the index of the handlability of any diblock copolymer, the melt viscosity thereof was measured at temperatures (80 °C and 120 °C), and it was evaluated. As a device for the measurement, there was used a Brookfield type viscometer (manufactured by Brookfield Engineering Labs. Inc.) or a flow tester CFT-500 model, capillary type viscometer (manufactured by Shimadzu Corp., conditions: plunger sectional area: 1 cm²; die (nozzle) size: a diameter of 1 mm and a length of 10 mm; and test load: 10 kg/cm²).

In order to evaluate various adhesive properties described in Table 1, adhesive compositions and adhesive tapes were prepared/produced in the following process.
(a) Process for preparing any one of the adhesive compositions and process for producing any one of the adhesive tapes:
   A diblock copolymer, a block polymer, a polymer and a tackifier having blend mass ratios shown in Table 1 were dissolved in toluene to produce an adhesive solution in toluene having a concentration of 35% by mass, and the solvent was distilled off from this under reduced pressure, so as to yield an adhesive composition.

The adhesive solution in toluene was applied onto a film made of polyethylene terephthalate with a coater so as to have a thickness of 254 µm. The resultant was dried and thermally treated at 160 °C for 30 minutes, to yield a tape for evaluating adhesive properties.

Furthermore, the melt viscosity, the hot-melt processability, and various adhesive properties [the adhesiveness (ball tackiness), the holding power and the adhesion] of the adhesive composition yielded as above were measured and evaluated as follows.
(b) Melt viscosity:
   The melt viscosity was measured by use of the flow tester CFT-500 model, capillary type viscometer (manufactured by Shimadzu Corp.) at 180 °C under the following conditions: plunger sectional area: 1 cm²; die (nozzle) size: a diameter of 1 mm and a length of 10 mm; and test load: 10 kg/cm². The fact that the melt viscosity is appropriate is an indicator that the hot-melt processability is good.
(c) Hot-melt processability:
   The applicability of any one of the adhesives when the adhesive was applied onto a polyester film by use of a coater at a temperature of 180 °C to have a coating thickness of 40 µm was decided in accordance with 5 ranks: "very good" (⊚), "good" (○), "slightly bad" (Δ), "bad" (x) and "very bad" (xx).
   (d) Adhesiveness (ball tackiness):
      The ball tack value was examined at 25 °C in accordance with JIS Z 0237. As the ball tack value is larger, the adhesiveness (tackiness) is better.
   (e) Holding power:
      The holding power was evaluated in accordance with JIS Z 0237. That is, any one of the produced adhesive tapes (width: 25 mm, and length: 25 mm) was adhered onto a stainless steel (SUS 304), and then a load of 1 kg was suspended therefrom at an environment temperature of 40 or 80 °C. The drop time thereof was obtained. As the time when the load was held without dropping (holding time) is longer, the holding power (creep performance) is better.
   (f) Adhesion:
      The adhesion was evaluated through a 180° peeling test in accordance with JIS Z 0237. That is, any one of the produced adhesive tapes (width: 25 mm, and length: 100 mm) was adhered onto a stainless steel (SUS 304) and a polyethylene sheet of about 1 mm thickness, and then the tape was peeled in the direction of 180° angle at 25 °C and a rate of 30 cm/minute.

### Synthesis Example 1 (Synthesis of a diblock copolymer A1)

A three-way stopcock was fitted into a 1-liter three-neck flask, and then the air inside the flask was removed and substituted with argon. Thereafter, thereto were added 291 g of toluene, 2.02 g of N,N,N',N",N"-pentamethyldiethylene triamine, and 12.2 g of a solution of isobutyl bis (2,6-di-t-butyl-4-methylphenoxy)aluminum in toluene, containing 8 . 18 mmol of the aluminum, at room temperature. Furthermore, thereto was added 1.98 g of a mixed solution of cyclohexane and n-hexane containing 3.38 mmol of sec-butyllithium. Thereto was added 11.1 g of methyl methacrylate. The reaction solution was initially colored into yellow. After the solution was stirred at room temperature (25 °C) for 1 hour, the solution turned colorless. At this time, 1 g of the reaction solution was collected. This was used as a sampled specimen 1. Subsequently, the polymer solution was cooled so that the inside temperature thereof was lowered to -2 °C, and thereto was dropwise added 143 g of n-butyl acrylate over 5 hours. After the end of the addition, 1 g of the reaction solution was collected. This was used as a sampled specimen 2. Subsequently, 1g of methanol was added to the reaction solution to stop the polymerization. This reaction solution obtained after the stop of the polymerization was poured into a large amount of a mixed solution of methanol and water (the ratio of methanol therein was 70% by mass), so as to yield an oily precipitation. This was used as a sampled specimen 3.

The sampled specimens 1 to 3 were subjected to ¹H-NMR measurement and GPC measurement. On the basis of the results, the Mw (weight-average molecular weight), the Mw/Mn (molecular weight distribution), and the mass ratio between the poly (methyl methacrylate) (PMMA) block and the poly (n-butyl acrylate) (PnBA) block therein, and others were obtained. As a result, it was made clear that the finally-obtained oily precipitation was a diblock copolymer A1 of PMMA-block-PnBA (PMMA-b-PnBA), the Mw (weight-averagemolecular weight) of the PMMAblockmoietywas 4, 700, the Mw/Mn (molecular weight distribution) thereof was 1.12, the Mw (weight-average molecular weight) of the whole of the diblock copolymer was 92,400, the Mw/Mn (molecular weight distribution) thereof was 1.25, and the percentages of the polymer blocks PMMA and PnBA were 7.1% by mass and 92.9% by mass, respectively.

The resultant diblock copolymer was in the form of liquid (high-viscosity liquid) at room temperature (25 °C). The melt viscosity thereof was measured with the Brookfield type viscometer. As a result, the viscosity was 126 Pa·s (1,260 poises) at 80 °C and 19 Pa·s (190 poises) at 120 °C. Thus, it was proved that the copolymer was in the form of liquid having a high fluidity and the handlabilities thereof, such as the transportability thereof, were excellent. Synthesis Example 2 (Synthesis of a diblock copolymer A2)

A diblock copolymer A2 of PMMA-block-PnBA (PMMA-b-PnBA) was synthesized in the same way as in Synthesis Example 1 except that the used amounts of methyl methacrylate and n-butyl acrylate were changed.

The Mw (weight-average molecular weight) of the PMMA block moiety of the resultant diblock copolymer A2 was 3,000, the Mw/Mn (molecular weight distribution) thereof was 1.15, the Mw (weight-average molecular weight) of the whole of the diblock copolymer was 43,000, the Mw/Mn (molecular weight distribution) thereof was 1.02, and the percentages of the polymer blocks PMMA and PnBA were 7.0% by mass and 93.0% by mass, respectively.

The melt viscosity of the resultant diblock copolymer A2 was measured with the flow tester capillary type viscometer. As a result, the viscosity was 23 Pa·s (230 poises) at 80 °C and 2 Pa·s (20 poises) at 120 °C.

### Synthesis Example 3 (Synthesis of a block copolymer B1)

A three-way stopcock was fitted into a 1-liter three-neck flask, and then the air inside the flask was removed and substituted with argon. Thereafter, thereto were added 278 g of toluene, 13.9 g of 1,2-dimethoxyethane, and 12.0 g of a solution of isobutyl bis (2,6-di-t-butyl-4-methylphenoxy)aluminum in toluene, containing 8.05 mmol of the aluminum, at roomtemperature. Furthermore, thereto was added 1.38 g of a mixed solution of cyclohexane and n-hexane containing 2.35 mmol of sec-butyllithium. Thereto was added 15.0 g of methyl methacrylate. The reaction solution was initially colored into yellow. After the solution was stirred at room temperature (25 °C) for 1 hour, the solution turned colorless. At this time, 1 g of the reaction solution was collected. This was used as a sampled specimen 4. Subsequently, the polymer solution was cooled so that the inside temperature thereof was lowered to - 30 °C, and thereto was dropwise added 90.0 g of n-butyl acrylate over 5 hours. After the end of the addition, 1 g of the reaction solution was collected. This was used as a sampled specimen 5. Subsequently, 15.0 g of methyl methacrylate was added to the reaction solution. The reaction solution was initially colored into yellow. After the solution was stirred at room temperature for 10 hour, the solution turned colorless. At this time, 1 g of the reaction solution was collected. This was used as a sampled specimen 6. Subsequently, 1 g of methanol was added to the reaction solution to stop the polymerization. This reaction solution obtained after the stop of the polymerization was poured into a large amount of a mixed solution of methanol and water (the ratio of methanol therein was 90% by mass), so as to yield a white precipitation. This was used as a sampled specimen 7.

The sampled specimens 4 to 7 were subjected to ¹H-NMR measurement and GPC measurement. On the basis of the results, the Mw (weight-average molecular weight), the Mw/Mn (molecular weight distribution), and the mass ratio between the poly (methyl methacrylate) (PMMA) block and the poly (n-butyl acrylate) (PnBA) block therein, and others were obtained. As a result, it was made clear that the finally-obtained white precipitation was a triblock copolymer B1 of PMMA-block-PnBA-block-PMMA (PMMA-b-PnBA-b-PMMA), the Mw (weight-average molecular weight) of the PMMA block moiety of one side thereof was 7,300, the Mw/Mn (molecular weight distribution) thereof was 1.09, the Mw (weight-average molecular weight) of the whole of the triblock copolymer was 68,000, and the Mw/Mn (molecular weight distribution) thereof was 1.05. The percentages of the polymer blocks PMMA, PnBA and PMMA were 12.5% by mass, 75.3% by mass, and 12.2% by mass, respectively.

Synthesis Example 4 (Synthesis of a block copolymer B2)

A three-way stopcock was fitted into a 1-liter three-neck flask, and then the air inside the flask was removed and substituted with argon. Thereafter, thereto were added 278 g of toluene, 13. 9 g of 1,2-dimethoxyethane, and 12.2 g of a solution of isobutyl bis (2,6-di-t-butyl-4-methylphenoxy) aluminum in toluene, containing 8.18 mmol of the aluminum, at room temperature. Furthermore, thereto was added 0.99 g of a mixed solution of cyclohexane and n-hexane containing 1.68 mmol of sec-butyllithium. Thereto was added 17.0 g of methyl methacrylate. The reaction solution was initially colored into yellow. After the solution was stirred at room temperature (25 °C) for 1 hour, the solution turned colorless. At this time, 1 g of the reaction solution was collected. This was used as a sampled specimen 8. Subsequently, the polymer solution was cooled so that the inside temperature thereof was lowered to - 30 °C, and thereto was dropwise added 102.0 g of n-butyl acrylate over 5 hours. After the end of the addition, 1 g of the reaction solution was collected. This was used as a sampled specimen 9. Subsequently, 17.0 g of methyl methacrylate was added to the reaction solution. The reaction solution was initially colored into yellow. After the solution was stirred at room temperature for 10 hour, the solution turned colorless. At this time, 1 g of the reaction solution was collected. This was used as a sampled specimen 10. Subsequently, 1 g of methanol was added to the reaction solution to stop the polymerization. This reaction solution obtained after the stop of the polymerization was poured into a large amount of a mixed solution of methanol and water (the ratio of methanol therein was 90% by mass), so as to yield a white precipitation. This was used as a sampled specimen 11.

The sampled specimens 8 to 11 were subjected to ¹H-NMR measurement and GPC measurement. On the basis of the results, the Mw (weight-average molecular weight), the Mw/Mn (molecular weight distribution), and the mass ratio between the poly(methyl methacrylate) (PMMA) block and the poly(n-butyl acrylate) (PnBA) block therein, and others were obtained. As a result, it was made clear that the finally-obtained white precipitation was a triblock copolymer B2 of PMMA-block-PnBA-block-PMMA (PMMA-b-PnBA-b-PMMA), the Mw (weight-average molecular weight) of the PMMA block moiety of one side thereof was 11,400, the Mw/Mn (molecular weight distribution) thereof was 1.07, the Mw (weight-average molecular weight) of the whole of the triblock copolymer was 107,000, and the Mw/Mn (molecular weight distribution) thereof was 1.04. The percentages of the polymer blocks PMMA, PnBA and PMMA were 12.5% by mass, 75.2% by mass, and 12.3% by mass, respectively.

### Synthesis Example 5 (Synthesis of a diblock copolymer C1)

A three-way stopcock was fitted into a 1-liter three-neck flask, and then the air inside the flask was removed and substituted with argon. Thereafter, thereto were added 278 g of toluene, 1.29 g of N,N,N',N",N"-pentamethyldiethylene triamine, and 11.1 g of a solution of isobutyl bis (2,6-di-t-butyl-4-methylphenoxy) aluminum in toluene, containing 7.46 mmol of the aluminum, at room temperature. Furthermore, thereto was added 1.46 g of a mixed solution of cyclohexane and n-hexane containing 2.49 mmol of sec-butyllithium. Thereto was added 22.4 g of methyl methacrylate. The reaction solution was initially colored into yellow. After the solution was stirred at room temperature (25 °C) for 1 hour, the solution turned colorless. At this time, 1 g of the reaction solution was collected. This was used as a sampled specimen 12. Subsequently, the polymer solution was cooled so that the inside temperature thereof was lowered to -5 °C, and thereto was dropwise added 133.1 g of n-butyl acrylate over 5 hours. After the end of the addition, 1 g of the reaction solution was collected. This was used as a sampled specimen 13. Subsequently, 1g of methanol was added to the reaction solution to stop the polymerization. This reaction solution obtained after the stop of the polymerization was poured into a large amount of a mixed solution of methanol and water (the ratio of methanol therein was 80% by mass), so as to yield a white precipitation. This was used as a sampled specimen 14. The sampled specimens 12 to 14 were subjected to ¹H-NMR measurement and GPC measurement. On the basis of the results, the Mw (weight-average molecular weight), the Mw/Mn (molecular weight distribution), and the mass ratio between the poly (methyl methacrylate) (PMMA) block and the poly (n-butyl acrylate) (PnBA) block therein, and others were obtained. As a result, it was made clear that the finally-obtained white precipitation was a diblock copolymer C1 of PMMA-block-PnBA (PMMA-b-PnBA), the Mw (weight-average molecular weight) of the PMMA block moiety of the sampled specimen 12 was 11,200, the Mw/Mn (molecular weight distribution) thereof was 1.07, the Mw (weight-average molecular weight) of the whole of the diblock copolymer was 89,500, and the Mw/Mn (molecular weight distribution) thereof was 1.25. The percentages of the polymer blocks PMMA and PnBA were 14. 1% by mass and 85.9% by mass, respectively.

The resultant diblock copolymer was in the form of a rice cake at room temperature (25 °C) . The melt viscosity thereof was measured with the Brookfield type viscometer. As a result, the viscosity was 1,000 Pa·s or more (10,000 poises or more) at 120 °C. Thus, it was proved that the copolymer had a very poor fluidity.

### Synthesis Examples 6 to 8 (Synthesis of diblock copolymers C2 to C4)

Diblock copolymers C2 to C4 of PMMA-block-PnBA (PMMA-b-PnBA) were synthesized in the same way as in Example 5 except that the used amounts of methyl methacrylate and n-butyl acrylate were changed.
(1) The Mw (weight-average molecular weight) of the PMMA block moiety of the resultant diblock copolymer C2 was 4,300, the Mw/Mn (molecular weight distribution) thereof was 1.13, the Mw (weight-average molecular weight) of the whole of the diblock copolymer was 46,900, the Mw/Mn (molecular weight distribution) thereof was 1.07, and the percentages of the polymer blocks PMMA and PnBA were 12.7% by mass and 87.3% by mass, respectively.
   The resultant diblock copolymer C2 was in a state intermediate between liquid and rice cake states (in a state close to the state of liquid) at room temperature (25 °C).
(2) The Mw (weight-average molecular weight) of the PMMA block moiety of the resultant diblock copolymer C3 was 4,300, the Mw/Mn (molecular weight distribution) -thereof was 1..13, the Mw (weight-average molecular weight) of the whole of the diblock copolymer was 26,700, the Mw/Mn (molecular weight distribution) thereof was 1.07, and the percentages of the polymer blocks PMMA and PnBA were 19.5% by mass and 80.5% by mass, respectively.
   The resultant diblock copolymer C3 was in a state intermediate between liquid and rice cake states (in a state close to the state of a rice cake) at room temperature (25 °C).
(3) The Mw (weight-average molecular weight) of the PMMA block moiety of the resultant diblock copolymer C4 was 10, 000, the Mw/Mn (molecular weight distribution) thereof was 1.09, the Mw (weight-average molecular weight) of the whole of the diblock copolymer was 137,000, the Mw/Mn (molecular weight distribution) thereof was 1.07, and the percentages of the polymer blocks PMMA and PnBA were 7.7% by mass and 92.3% by mass, respectively.

The resultant diblock copolymer C3 was in a liquid state at room temperature (25 °C).

### Examples 1 to 5

Adhesive compositions having formulations shown in Table 1 were prepared, using the diblock polymers A1 and A2 obtained in Synthesis Examples 1 and 2, block copolymers B1 and B2 obtained in Synthesis Examples 3 and 4, and a tackifier. Next, the adhesive compositions were used to measure and evaluate the melt viscosity, the hot-melt processability, and various adhesive properties [the adhesiveness (ball tackiness), the holding power and the adhesion] thereof according to the above-mentioned test methods. The obtained results are shown in Table 2. As the tackifier in Example 2, there was used a tackifier KE-311 manufactured by Arakawa Chemical Industries, Ltd., which is a hydrogenated rosin glycerin ester.

### Comparative Example 1

The block copolymer B1 obtained in Synthesis Example 3 was used to carry out various measurements and evaluations in the same way as in Example 1. The obtained results are shown in Table 2.

### Comparative Example 2

The block copolymer B2 obtained in Synthesis Example 4 was used to carry out various measurements and evaluations in the same way as in Example 1. The obtained results are shown in Table 2.

### Comparative Example 3

A poly (n-butyl acrylate) (PnBA) which was obtained by ordinary radical polymerization and had an Mw (weight-average molecular weight) of 59,000 and an Mw/Mn (molecular weight distribution) of 2.91 and the block copolymer B1 obtained in Synthesis Example 3 were used to carry out various measurements and evaluations in the same way as in Example 1. The obtained results are shown in Table 2.

### Comparative Examples 4 to 7

The diblock copolymers C1 to C4 and the block copolymer B2 were used to carry out various measurements and evaluations in the same way as in Example 1. The obtained results are shown in Table 2.

**Table 1**

| | Constituents (parts by mass) | | |
|---|---|---|---|
| | Polymer | Block copolymer B1 or B2 | Tackifier |
| Example 1 | Diblock copolymer A1 100 | Polymer B1 100 | 0 |
| Example 2 | Diblock copolymer A1 50 | Polymer B1 100 | 60 |
| Example 3 | Diblock copolymer A1 100 | Polymer B2 100 | 0 |
| Example 4 | Diblock copolymer A1 200 | Polymer B2 100 | 0 |
| Example 5 | Diblock copolymer A2 100 | Polymer B2 100 | 0 |
| Comparative Example 1 | 0 | Polymer B1 100 | 0 |
| Comparative Example 2 | 0 | Polymer 82 100 | 0 |
| Comparative Example 3 | PnBA 100 | Polymer B1 100 | 0 |
| Comparative Example 4 | Diblock copolymer C1 100 | Polymer B2 100 | 0 |
| Comparative Example 5 | Diblock copolymer C2 100 | Polymer B2 100 | 0 |
| Comparative Example 6 | Diblock copolymer C3 100 | Polymer B2 100 | 0 |
| Comparative Example 7 | Diblock copolymer C4 100 | Polymer B2 100 | 0 |

**Table 2**

| | Measurement/evaluation results of adhesive properties | | | | | | |
|---|---|---|---|---|---|---|---|
| | Melt viscosity 180 °C (mPa·s) | Hot-melt processability | Ball tackiness | Holding power (minutes) at 40 °C | Holding power (minutes) at 80 °C | Adhesion to stainless steel (g/cm) | Adhesion to polyethylene (g/cm) |
| Example 1 | 5,600 | ⊚ | 11 | 240 or more | 108 | 310 | 100 |
| Example 2 | 3,500 | ⊚ | 3 | 240 or more | 154 | 700 | 430 |
| Example 3 | 24,000 | ○ | 12 | 240 or more | 200 | 290 | 50 |
| Example 4 | 7,100 | ⊚ | 14 | 161 | 50 | 390 | 150 |
| Example 5 | 14,000 | ○ | 15 | 240 or more | 190 | 470 | 170 |
| Comp. Ex. 1 | 56,000 | Δ | 6 | 240 or more | 240 or more | 90 | 20 |
| Comp. Ex. 2 | 2,800,000 | X | 5 | 240 or more | 240 or more | 70 | Less than 10 |
| Comp. Ex. 3 | 3,200 | ⊚ | 8 | 110 | 22 | 30 | 30 |
| Comp. Ex. 4 | 140,000 | X | 12 | 240 or more | 240 or more | 420 | 70 |
| Comp. Ex. 5 | 850,000 | X | 14 | 240 or more | 240 or more | 480 | 180 |
| Comp. Ex. 6 | 380,000 | X | 15 | 240 or more | 240 or more | 530 | 250 |
| Comp. Ex. 7 | 1,080,000 | X | 16 | 240 or more | 240 or more | 430 | 160 |

From the above-mentioned results, it is understood that the diblock copolymer used in the invention is a liquid substance having a high fluidity at elevated temperatures and the handlabilities thereof, such as the handlability in the production thereof and the handlability in the transportation thereof, are excellent. It is also understood that the hot-melt adhesive composition comprising this is excellent in hot-melt processability, holding power and others and further when a tackifier is incorporated into the composition and the resultant is used, the effect of making the ball tackiness and the adhesion better is produced. From the results of Comparative Example 3, it is understood that in the case of poly (n-butyl acrylate) alone, which has no polymer block represented by X in the general formula (I), the effect of improving the hot-melt processability is produced but the holding power and the adhesion are low. From the results of Comparative Examples 4 to 7, it is also understood that in the case that the weight-average molecular weight (Mw) and/or the mass ratio of X/Y of the polymer block represented by X is/are large, the holding power and adhesion are good but the hot-melt processability is bad.

It is understood from the above that when the diblock copolymer is incorporated as an adhesive component and used, the copolymer expresses excellent performances about both of hot-melt processability and adhesive properties, such as holding power and adhesion.

### Industrial Applicability

In the case when the diblock copolymer is used as a component of the hot-melt type adhesive, the melt viscosity of the said adhesive composition is lowered and the hot-melt processability thereof to a substrate is improved. Moreover, the adhesiveness and the adhesion thereof can be improved while the holding power is kept. Thus, the diblock copolymer is useful. The diblock copolymer used in the invention is a liquid substance having a high fluidity at high temperatures, and is excellent in handlabilities, such as handlability in the production thereof and that in the transportation thereof.

The hot-melt adhesive composition comprising the diblock copolymer of this invention makes it possible to produce smoothly a high-quality adhesive material such as an adhesive tape or an adhesive sheet, and reduce burdens onto the environment in the production process thereof, and also has excellent heat resistance, weather resistance which originate from the structure thereof. It is therefore suitable that the hot-melt adhesive composition and the adhesive material comprising this are used at high temperature or in the environment that is exposed to ultraviolet rays for a long term.

## Claims

1. A hot-melt adhesive composition,
comprising 100 parts by mass of a diblock copolymer represented by the following general formula (I)
X-Y (I)
in which X represents a polymer block made of alkyl methacrylate units, wherein the alkyl is one having 1 to 4 carbon atoms or one having a cyclic structure, and wherein 20 % or less by mass of the total of the polymer block X is of other monomer units; Y represents a polymer block made of alkyl acrylate units wherein the alkyl has 1 to 20 carbon atoms, and/or alkyl methacrylate units, wherein the alkyl has 5 to 20 carbon atoms, and wherein 20 % or less by mass of the total of the polymer block Y is of other monomer units; the weight-average molecular weight (Mw) of the polymer block X being from 2,000 to 6,000 g/mol and the ratio of the mass of the polymer block X to that of the polymer block Y, which is the X/Y mass ratio, being in the range of 1/99 to 10/90; wherein the diblock copolymer has a viscosity of 1 to 1,000 Pa · s at temperatures of 80 to 120 °C (inclusive) as measured by a Brookfield type viscometer or a flow tester CFT-500 model, capillary type viscometer (manufactured by Shimadzu Corp., conditions: plunger sectional area: 1 cm²; die (nozzle) size: a diameter of 1 mm and a length of 10 mm; and test load: 10 kg/cm²), and is in the liquid state in the temperature range of 100 °C or higher; wherein the ratio of the weight-average molecular weight (Mw) of the polymer block X to the number-average molecular weight (Mn) thereof (Mw/Mn) is 1.01 to 1.3; and said hot-melt adhesive composition also
comprising from 10 to 10,000 parts by mass of at least one triblock copolymer, which is a triblock copolymer represented by the formula A-B-A or the formula A-B-C in which A, B and C represent polymer blocks different from each other, wherein A is made of alkyl methacrylate units, B is made of alkyl acrylate units, and C is made of alkyl acrylate units or alkyl methacrylate units.

2. The hot-melt adhesive composition according to claim 1, wherein the polymer block X is made of the alkyl methacrylate units, wherein the alkyl is one having 1 to 4 carbon atoms, and wherein 20 % or less by mass of the total of the polymer block X is of other monomer units; and the polymerization block Y is made of the alkyl acrylate units, wherein the alkyl has 1 to 20 carbon atoms, and wherein 20 % or less by mass of the total of the polymer block Y is of other monomer units.

3. The hot-melt adhesive composition according to claim 1 or 2, further comprising a tackifier.

4. An adhesive material, comprising the hot-melt adhesive composition according to any one of claims 1 to 3.

## Patentansprüche

1. Fieißschmelzhaftmittelzusammensetzung, die 100 Massenteile eines Diblockcopolymers umfasst, das durch die folgende allgemeine Formel (I) dargestellt ist
X-Y (I)
worin X einen Polymerblock darstellt, der aus Alkylmethacrylateinheiten hergestellt ist, wobei das Alkyl eines mit 1 bis 4 Kohlenstoffatomen oder eines mit einer cyclischen Struktur ist, und wobei 20 % oder weniger, bezogen auf die Masse, des gesamten Polymerblocks X aus anderen Monomereinheiten ausgebildet sind, Y einen Polymerblock darstellt, der aus Alkylacrylateinheiten, wobei das Alkyl 1 bis 20 Kohlenstoffatome aufweist, und/oder Alkylmethacrylateinheiten, wobei das Alkyl 5 bis 20 Kohlenstoffatome aufweist, hergestellt ist, und wobei 20 % oder weniger, bezogen auf die Masse, des gesamten Polymerblocks Y aus anderen Monomereinheiten ausgebildet sind, wobei das Gewichtsmittel des Molekulargewichts (Mw) des Polymerblocks X von 2000 bis 6000 g/mol beträgt und das Verhältnis der Masse des Polymerblocks X zu der Masse des Polymerblocks Y, wobei es sich um das X/Y-Massenverhältnis handelt, im Bereich von 1/99 bis 10/90 liegt, wobei das Diblockcopolymer eine Viskosität von 1 bis 1000 Pa · s bei Temperaturen von 80 bis 120 °C (einschließlich) aufweist, und zwar gemessen mit einem Viskosimeter des Brookfield-Typs oder einem Fließprüfgerät Modell CFT-500, Viskosimeter des Kapillartyps (von Shimadzu Corp. hergestellt, Bedingungen: Kolbenquerschnittsfläche: 1 cm², Düsengröße (Mündungsgröße): Durchmesser 1 mm und Länge 10 mm, und Prüflast: 10 kg/cm²), und im Temperaturbereich von 100 °C oder höher im flüssigen Zustand vorliegt, wobei das Verhältnis des Gewichtsmittels des Molekulargewichts (Mw) des Polymerblocks X zu dessen Zahlenmittel des Molekulargewichts (Mn) (Mw/Mn) 1,01 bis 1,3 beträgt, und wobei die Heißschmelzhaftmittelzusammensetzung auch 10 bis 10000 Massenteile mindestens eines Triblockcopolymers umfasst, bei dem es sich um ein Triblockcopolymer handelt, das durch die Formel A-B-A oder die Formel A-B-C dargestellt ist, worin A, B und C Polymerblöcke darstellen, die voneinander verschieden sind, wobei A aus Alkylmethacrylateinheiten hergestellt ist, B aus Alkylacrylateinheiten hergestellt ist und C aus Alkylacrylateinheiten oder Alkylmethacrylateinfieiten hergestellt ist.

2. Heißschmelzhaftmittelzusammensetzung nach Anspruch 1, bei welcher der Polymerblock X aus den Alkylmethacrylateinheiten hergestellt ist, wobei das Alkyl eines ist, das 1 bis 4 Kohlenstoffatome aufweist, und wobei 20 % oder weniger, bezogen auf die Masse, des gesamten Polymerblocks X aus anderen Monomereinheiten ausgebildet sind, und der Polymerisationsblock Y aus den Alkylacrylateinheiten hergestellt ist, wobei das Alkyl 1 bis 20 Kohlenstoffatome aufweist, und wobei 20 % oder weniger, bezogen auf die Masse, des gesamten Polymerblocks Y aus anderen Monomereinheiten ausgebildet sind.

3. Heißschmelzhaftmittelzusammensetzung nach Anspruch 1 oder 2, die ferner einen Klebrigmacher umfasst.

4. Haftmittelmaterial, das die Heißschmelzhaftmittelzusammensetzung nach einem der Ansprüche 1 bis 3 umfasst.

## Revendications

1. Composition adhésive thermofusible,
comprenant 100 parties en masse d'un copolymère diséquencé représenté par la formule générale (I) suivante :
X-Y (I)
dans laquelle X représente une séquence polymère constituée d'unités méthacrylate d'alkyle, où l'alkyle a 1 à 4 atomes de carbone ou a une structure cyclique, et où 20% en masse ou moins du total de la séquence polymère X sont constitués d'autres unités monomères ; Y représente une séquence polymère constituée d'unités acrylate d'alkyle, où l'alkyle a 1 à 20 atomes de carbone, et/ou d'unités méthacrylate d'alkyle, où l'alkyle a 5 à 20 atomes de carbone, et où 20% en masse ou moins du total de la séquence polymère Y sont constitués d'autres unités monomères ; le poids moléculaire moyen en poids (Mw) de la séquence polymère X se situant dans l'intervalle allant de 2000 à 6000 g/mole et le rapport de la masse de la séquence polymère X à celle de la séquence polymère Y, qui est le rapport massique X/Y, se situant dans l'intervalle allant de 1/99 à 10/90 ; où le copolymère diséquencé a une viscosité allant de 1 à 1000 Pa.s à des températures allant de 80 à 120°C (y compris), mesurée par un viscosimètre de type Brookfield ou un viscosimètre de type capillaire, modèle flow tester CFT-500 (fabriqué par Shimazu Corp., conditions : surface transversale du piston : 1 cm², taille de la matrice (buse): diamètre de 1 mm et longueur de 10 mm ; charge de test: 10 kg/cm²) et est à l'état liquide dans la plage de température de 100°C et plus ; où le rapport du poids moléculaire moyen en poids (Mw) de la séquence polymère X au poids moléculaire moyen en nombre (Mn) de celle-ci (Mw/Mn) se situe dans l'intervalle allant de 1,01 à 1,3 ; et ladite composition adhésive thermofusible comprenant également 10 à 10 000 parties en masse d'au moins un copolymère triséquencé, qui est un copolymère triséquencé représenté par la formule A-B-A ou la formule A-B-C, où A, B et C représentent des séquences polymères différentes les unes des autres, où A est constitué d'unités méthacrylate d'alkyle, B est constitué d'unités acrylate d'alkyle et C est constitué d'unités acrylate d'alkyle ou d'unités méthacrylate d'alkyle.

2. Composition adhésive thermofusible selon la revendication 1, où la séquence polymère X est constituée d'unités méthacrylate d'alkyle, où l'alkyle a 1 à 4 atomes de carbone, et où 20% en masse ou moins du total de la séquence polymère X sont constitués d'autres unités monomères ; et la séquence de polymérisation Y est constituée d'unités acrylate d'alkyle, où l'alkyle a 1 à 20 atomes de carbone, et où 20% en masse ou moins du total de la séquence polymère Y sont constitués d'autres unités monomères.

3. Composition adhésive thermofusible selon la revendication 1 ou 2, comprenant en outre, un agent tackifiant.

4. Matériau adhésif, comprenant la composition adhésive thermofusible selon l'une quelconque des revendications 1 à 3.
